# EUROPEAN PATENT SPECIFICATION

(11) **EP 2 407 003 B1**
(45) Date of publication and mention of the grant of the patent: **17.02.2016**
(21) Application number: 10710701.3
(22) Date of filing: 09.03.2010
(51) Int. Cl.: H04W 84/18

(54) **MOBILE AD-HOC NETWORK HAVING INTERFERENCE MITIGATION AND RELATED METHODS**
AD-HOC-MOBILFUNKNETZ MIT INTERFERENZMINDERUNG UND ENTSPRECHENDE VERFAHREN
RÉSEAU AD-HOC MOBILE AVEC RÉDUCTION D'INTERFÉRENCE ET PROCÉDÉS ASSOCIÉS

(30) Priority: 10.03.2009 US 400982
(43) Date of publication of application: 18.01.2012
(73) Proprietor: Harris Corporation, Melbourne, FL 32919 (US)
(72) Inventor: KELLERMAN, Fred C., Webster New York 14580 (US); NIETO, John W., Rochester New York 14610 (US); FURMAN, William Nelson, Fairport New York 14450 (US)
(74) Representative: Schmidt, Steffen
(86) International application number: PCT/US2010/026672
(87) International publication number: WO 2010/104860

(56) References cited:
- US-A- 4 639 937
- KIM S W: "Bandwidth-efficient coded cooperative relaying in wireless networks" MILCOM 2006, 23 October 2006 (2006-10-23), - 25 June 2006 (2006-06-25) XP002587538 Washington, DC, USA
- XIAOCONG QIAN ET AL: "Application of multiuser detection on CDMA-based MANET" SIGNAL PROCESSING AND ITS APPLICATIONS, 2005. PROCEEDINGS OF THE EIGHT H INTERNATIONAL SYMPOSIUM ON SYDNEY, AUSTRALIA AUGUST 28-31, 2005, PISCATAWAY, NJ, USA,IEEE, PISCATAWAY, NJ, USA, vol. 1, 28 August 2005 (2005-08-28), pages 363-366, XP010885455 ISBN: 978-0-7803-9243-4

## Description

The present invention relates to the field of wireless communications, and, more particularly, to mobile ad-hoc network interference mitigation and related methods.

Wireless networks have experienced increased development in the past decade. One of the most rapidly developing areas is mobile ad hoc networks (MANETs). Physically, a MANET includes a number of geographically distributed, potentially mobile nodes sharing one or more common radio channels. Compared with other types of networks, such as, cellular networks or satellite networks, the most distinctive feature of MANETS is the lack of any fixed infrastructure. The network is formed of mobile (and potentially stationary) nodes, and is created on the fly as the nodes communicate with each other. The network does not depend on a particular node and dynamically adjusts as some nodes join or others leave the network.

A MANET is disclosed in United States Patent No. 7,216,282 to Cain, assigned to the present application's assignee. The MANET may include a source node, a destination node, and a plurality of intermediate nodes. The source node may establish a plurality of routes to the destination node for transferring data therebetween, where each route passes through at least one of the intermediate nodes. The source node may also encode a plurality of data packets using a forward error correction (FEC) encoding algorithm to generate error correction data for the data packets, interleave the data packets and error correction data, and distribute and send the interleaved data packets and error correction data across the routes to the destination node. Furthermore, the destination node may receive and deinterleave the interleaved data packets and error correction data. The destination node may also decode the data packets based upon the error correction data using an FEC decoding algorithm to correct compromised data packets.

Another development in MANETs is disclosed in United States Patent No. 7,085,290 to Cain et al., also assigned to the present application's assignee. Cain et al. discloses a MANET that may include a plurality of mobile nodes, each including a wireless communications device and a controller connected thereto. At an upper protocol layer, the controller may establish a quality-of-service (QoS) threshold. At an intermediate protocol layer, the controller may select at least one route for transmitting data to at least one destination mobile node based upon the QoS threshold, and determine whether a QoS metric for the selected route falls below the threshold. At a lower protocol layer, the controller may cooperate with the wireless communications device to transmit data to the at least one destination mobile node via the at least one selected route, and cooperate with the wireless communications device at the lower protocol layer to adjust signal transmission power, pattern, and/or gain based upon a determination that the QoS metric has fallen below the QoS threshold.

One example of a particularly advantageous communications protocol is an "avalanche" communication protocol, as first disclosed in United States Patent No. 4,639,937 to McRae et al., also assigned to the present application's assignee. A typical "avalanche" relay communication network includes a plurality of transceiver stations spread out over a geographic area to establish spatial diversity among the stations. The transceiver equipment at each station has the capability of simultaneous transmission over the same frequency through a "common knowledge" network timing scheme, such as time division multiple access, and has the capability of taking advantage of received multipath signals. Communications between a source station and a destination station are achieved by the source station modulating onto a high frequency (HF) carrier (or other RF carrier bands, such as, the very high frequency (VHF) band and the ultra high frequency (UHF) band) a digital packet formatted to contain the number of times the message is to be repeated and a method of establishing the quality of the received message. All stations having correctly received the packet repeat that same message on the same carrier frequency at the same pre-established future absolute time. The typical "avalanche" relay communication network provides connectivity for an HF (or VHF, UHF, etc.) communication channel by a communication scheme that uses relay techniques to achieve path diversity without additional frequency allocation or instantaneous status information.

KIM S W: "Bandwidth-efficient coded cooperative relaying in wireless networks" MILCOM 2006, 23 October 2006 (2006-10-23), - 25 June 2006 (2006-06-25) Washington, DC, USA, discloses a MANET which comprises a plurality of intermediate, relay nodes interposed between a transmitter and a receiver. A decorrelation technique is suggested for a CDMA network.

In view of the foregoing background, it is therefore an object of the present invention to provide a mobile ad-hoc network (MANET) that has robust interference mitigation and improved throughput performance.

This and other objects, features, and advantages in accordance with the present invention are provided by a MANET comprising, according to claim 1, a plurality of mobile nodes establishing wireless communications links therebetween. The plurality of mobile nodes communicate based upon an avalanche communications protocol. Each mobile node may comprise a wireless transceiver, and a decorrelation filter cooperating therewith for reducing interference from other mobile nodes. The MANET may use an avalanche communications protocol that is advantageous for some applications but that may cause interference, and the MANET uses a decorrelation filter to mitigate this interference.

More specifically, the decorrelation filter may comprise an adaptive decorrelation filter. For example, the decorrelation filter also filters one or more of multi-path interference from other mobile nodes or narrow band interference from other sources.

In some embodiments, each mobile node may further comprise a downconverter upstream from the decorrelation filter for converting a received signal into a baseband signal. Also, each mobile node may further comprise a demodulator downstream from the decorrelation filter. For example, each mobile node may communicate based upon a Gaussian minimum shift keying (GMSK) protocol. Additionally, each mobile node may communicate based upon a voice relay protocol.

Another aspect is directed to a method of operating a MANET according to claim 7. The MANET may include a plurality of mobile nodes establishing wireless communications links therebetween. Each mobile node may comprise a wireless transceiver, and a decorrelation filter cooperating therewith. The method may include communicating via the plurality of mobile nodes based upon an avalanche communications protocol, and reducing interference from other mobile nodes with the decorrelation filter.
FIG. 1 is a schematic diagram of a mobile ad-hoc network (MANET) according to the present invention.
FIG. 2 is a graph of a received signal in a MANET according to the prior art.
FIG. 3 is an ideal frequency spectrum diagram for a receiver node in the MANET of FIG. 1.
FIG. 4 is another frequency spectrum diagram for a receiver node in a MANET using an avalanche communications protocol according to the prior art.
FIG. 5 is a frequency spectrum diagram for a receiver node in the MANET of FIG. 1.
FIG. 6 is a graph of error free packets versus relative signal-to-noise (SNR) for communications in the MANET of FIG. 1 and in the MANET according to the prior art.

The present invention will now be described more fully hereinafter with reference to the accompanying drawings, in which preferred embodiments of the invention are shown. This invention may, however, be embodied in many different forms and should not be construed as limited to the embodiments set forth herein. Rather, these embodiments are provided so that this disclosure will be thorough and complete, and will fully convey the scope of the invention to those skilled in the art. Like numbers refer to like elements throughout.

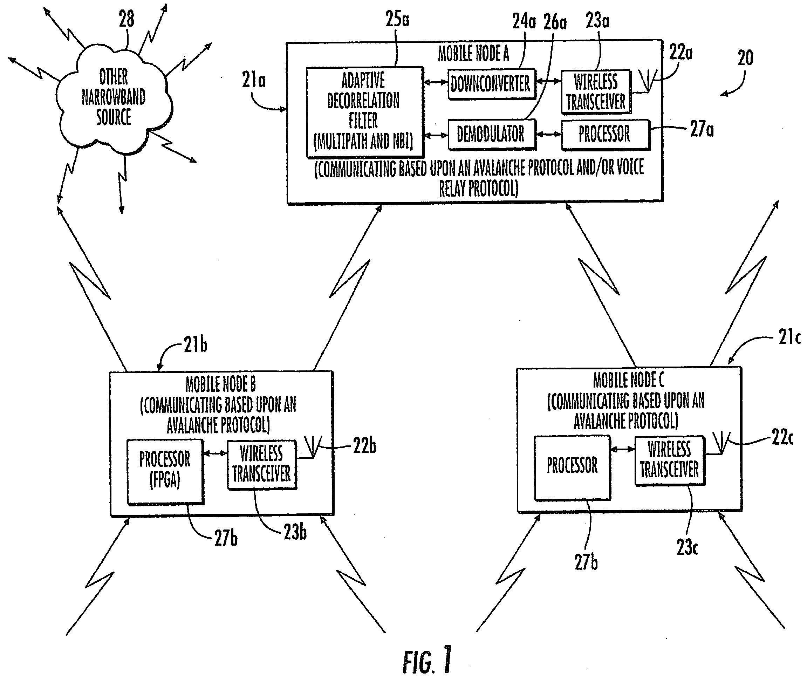

Referring initially to FIG. 1, a mobile ad-hoc network **20** (MANET) according to the present invention is now described. The MANET **20** illustratively includes a plurality of mobile nodes **21a-21c** establishing wireless communications links therebetween.

As will be appreciated by those skilled in the art, the plurality of mobile nodes **21a-21c** communicate based upon an avalanche communications protocol, as disclosed in United States Patent No. 4,639,937 to McRae et al., also assigned to the present application's assignee, the contents of which are hereby referenced to.

Each mobile node **21a-21c** illustratively includes a wireless transceiver **23a-23c,** and an antenna **22a-22c** coupled thereto. For example, each mobile node **21a-21c** may be based upon an advanced networking wideband waveform (ANW2) MANET ManPack, Release 3.0, modified by the disclosure herein. The MANET ManPack is available from the Harris Corporation of Melbourne, FL, the assignee of the present application.

For ease of illustration, only MANET node A **21a** is shown in detail. Nonetheless, as will be readily appreciated by the skilled person in the art, the other nodes **21b-21c** are similar. The mobile node **21a** illustratively includes a downconverter **24a** downstream from the wireless transceiver **23a** for converting a received signal into a baseband signal, as will be appreciated by those skilled in the art.

Furthermore, the mobile node **21a** illustratively includes an adaptive decorrelation filter **25a** downstream from the downconverter **24a** and cooperating with the wireless transceiver **23a** for reducing interference from other mobile nodes **21b-21c.** For example, the adaptive decorrelation filter **24a** may comprise the decorrelation filter disclosed in co-pending United States Patent Application Serial No. 11/871,174 to Furman et al., also assigned to the present application's assignee, the contents of which are referenced to. In other embodiments, the decorrelation filter **25a** may be a static decorrelation filter (instead of adaptive).

Also, the mobile node **21a** illustratively includes a demodulator **26a** downstream from the adaptive decorrelation filter **25a** for demodulating the filtered received signal. The mobile node **21a** illustratively includes a processor **27a** downstream from the demodulator **26a**. The wireless transceiver **23a,** the downconverter **24a,** the adaptive decorrelation filter **25a,** the demodulator **26a,** and the processor **27a** may all advantageously be implemented with an ANW2 modem field-programmable gate array (FPGA) or could be implemented on a general purpose processor (GPP) or digital signal processor (DSP).

The MANET **20** may operate based upon a Gaussian minimum shift keying (GMSK) communications protocol, for example, GMSK Rake 16 and 32, as disclosed in United States Patent No. 7,352,795 to Furman et al., also assigned to the present application's assignee, the contents of which are referenced to. As will be appreciated by those skilled in the art, the MANET **20** may operate based upon other spread spectrum signaling schemes, such as M-ary phase shift keying (M-PSK). Additionally, the MANET **20** and the mobile nodes **21a-21c** therein may communicate based upon a voice relay protocol. Advantageously, the adaptive decorrelation filter **25a** can also reduce the multi-path interference from one or more mobile nodes **21b-21c** or filter out narrow band interference **28** from other sources, for example, jammer devices.

For example, the decorrelation filter **25a** can reduce the effects of multiple (close to simultaneous) avalanche or relay transmissions from other mobile nodes **21b-21c** while also filtering narrow band interference signals from other sources, i.e., the illustrated narrow band interference **28.** As will be appreciated by those skilled in the art, in the illustrated embodiment, avalanche transmissions from a plurality of mobile nodes **21b-21c** can be viewed as interference at a receiver node when all the superimposed avalanche transmissions cannot be demodulated by this receiver.

Another aspect is directed to a MANET node **21a.** The MANET node **25a** illustratively includes a wireless transceiver **23a** communicating based upon an avalanche communications protocol and with a plurality of other mobile nodes **21b-21c** establishing wireless communications links therebetween. The MANET node **21a** illustratively includes a decorrelation filter **25a** cooperating with the wireless transceiver **23a** for reducing the interference from the plurality of other mobile nodes **21b-21c.**

Another aspect is directed to a method of operating a MANET **20.** The MANET **20** may include a plurality of mobile nodes **21a-21c** establishing wireless communications links therebetween. Each mobile node **21a** illustratively includes a wireless transceiver **23a,** and a decorrelation filter **25a** cooperating therewith. The method may include communicating via the plurality of mobile nodes **21a-21c** based upon an avalanche communications protocol, and reducing the interference from other mobile nodes with the decorrelation filter **25a.**

Advantageously, the MANET **20** communicates using the avalanche communications protocol, which provides greater geographical coverage and path diversity, yet manages to reduce the multipath interference, which may render a typical MANET inoperable.

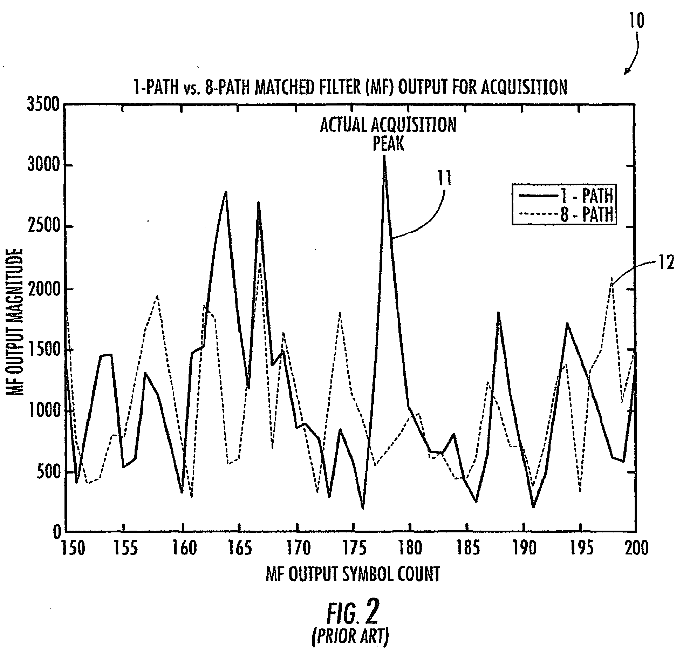

Referring now to FIGS. 2-6, the performance of the above MANET **20** is simulated in an avalanche GMSK communications protocol environment with greater than two or ten mobile nodes and compared with the performance of a typical MANET in a similar environment. More specifically and as will be appreciated by those skilled in the art, this simulated typical MANET is using a matched filter, i.e., a correlator, to facilitate signal detection and reduce interference. Diagram **10** (FIG. 2) includes curves **11-12** illustrating a received signal at a receiver mobile node in the typical MANET. The black curve **11** represents the received signal in a simple one-path environment, i.e., there are only two mobile nodes communicating between each other. The light gray curve **12** represents the received signal in an eight-path environment, i.e., there are at least ten mobile nodes in the MANET. As shown by the curve **12,** the receiver mobile node must process up to eight high signal-to-noise ratio (SNR) multipath quasi-aligned signals.

As shown, the eight-path received signal is severely distorted. Indeed, the received signal may be found to be unusable due to excessive multipath, which the receiver cannot handle effectively, causing some of the 8 transmissions to become interference. In other words, the typical MANET with eight-nodes or more may be inoperable when using the avalanche communications protocol. This is due to the limitations of the receiver in exploiting the multiple transmissions.

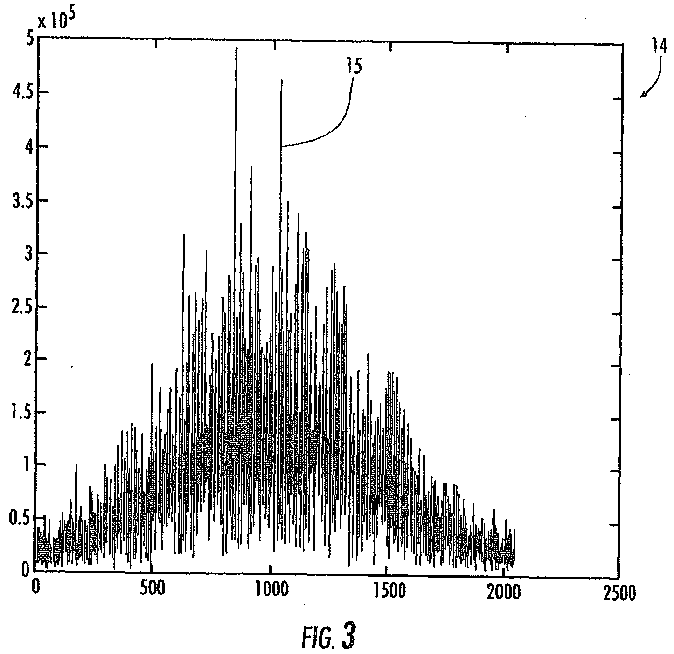

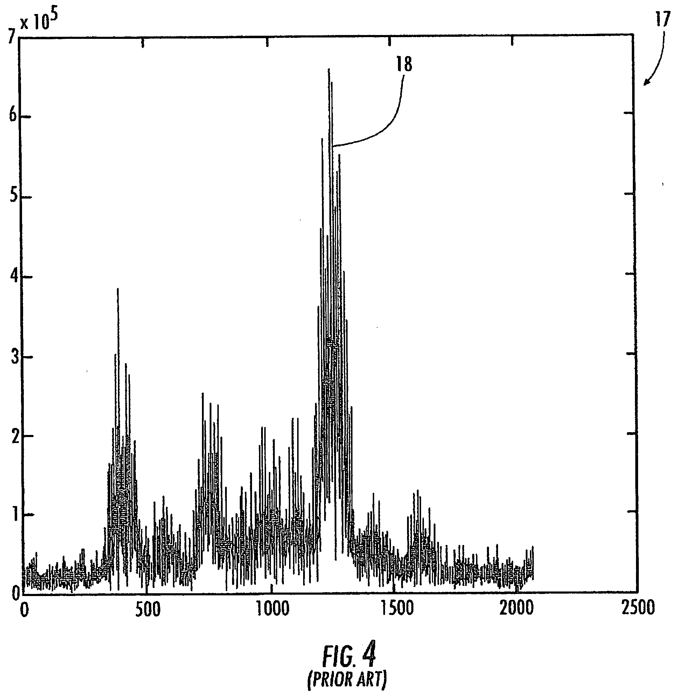

Furthermore, diagram **14** (FIG. 3) includes a data plot **15** for illustrating an ideal baseband received frequency spectrum in the simulated environment for the MANET **20,** i.e., only one transmitter. Differently, diagram **17** (FIG. 4) includes a data plot **18** for illustrating the received frequency spectrum in the typical MANET in the eight-path environment, i.e., 8 close to simultaneous relays. The diagram **17** (FIG. 4) again illustrates the significant spectral distortion introduced in the received signal in the typical MANET.

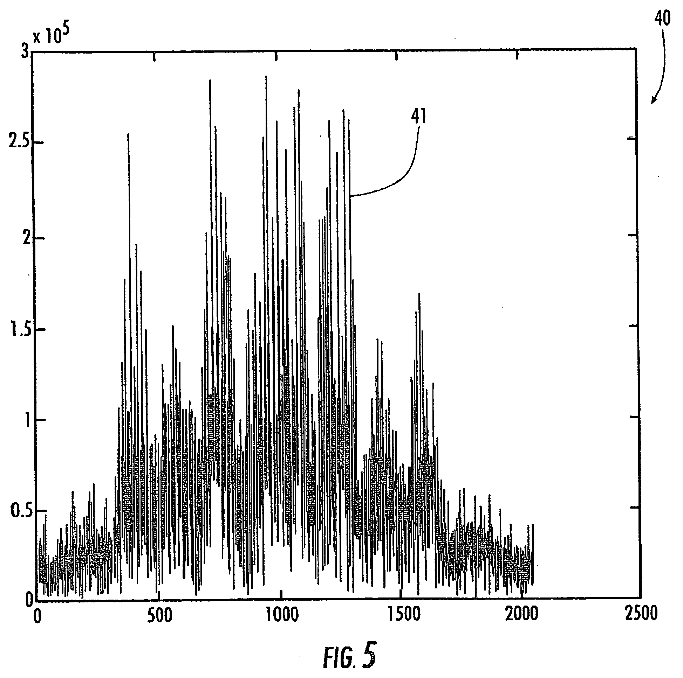

Advantageously, the MANET **20** described above efficiently reduces the significant multi-path interference experienced by the typical MANET. For example, diagram **40** (FIG. 5) includes a data plot **41** for illustrating the received filtered frequency spectrum at the receiver mobile node **21a.** As shown, the spectral composition of this signal is closer to the ideal received spectrum, i.e., data plot **15** (FIG. 3).

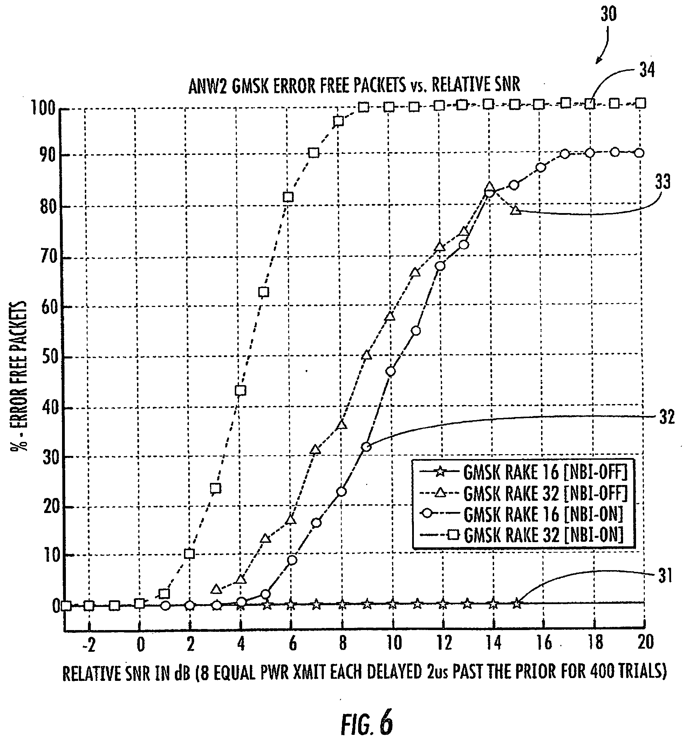

Lastly, diagram **30** (FIG. 6) illustrates the percentage of error free packets received versus SNR ratio for the receiver mobile node in the typical MANET (curves **31, 33**) and in the MANET **20** described above (curves **32, 34**). As shown, the MANET **20** described herein increases the percentage of error free packets received. Indeed, in the GMSK Rake 16 modulation, the typical MANET was inoperable and the receiver mobile node received zero error free packets.

As shown in the above simulations, the typical MANET may be inoperable in applications where relay nodes number eight or more. Indeed, the above described MANET **20** permits use of the avalanche communications protocol and permits mobile node counts significantly greater than that of the typical MANET, thereby providing greater network coverage and spatial diversity. As will be appreciated by those skilled in the art, depending on the type of waveform used, for example, GMSK Rake 8, GMSK Rake 16, GMSK Rake 32, etc., the number of relay nodes necessary for receiver to malfunction may be less than 8.

## Claims

1. A mobile ad-hoc network MANET (20) which lacks of any fixed infrastructure, is configured to dynamically adjust and permits nodes to join and to leave, the MANET (20) comprising:
a plurality of mobile nodes (21a-21c) establishing wireless communications links therebetween, said plurality of mobile nodes (21a-21c) communicating based upon a relay communications protocol such that all nodes (21a-21c) that have correctly received a message repeat the same message on the same carrier frequency at the same pre-established future absolute time;
each mobile node (21a-21c) comprising a wireless transceiver (23a-23c);
wherein each mobile node (21a-21c) further comprises a decorrelation filter (25a-25c) cooperating with the wireless transceiver (23a-23c) for reducing interference from other mobile nodes (21a-21c).

2. The MANET according to Claim 1 wherein said decorrelation filter (25a-25c) comprises an adaptive decorrelation filter.

3. The MANET according to Claim 1 wherein said decorrelation filter (25a-25c) is also configured for reducing multi-path interference from other mobile nodes (21a-21c).

4. The MANET according to Claim 1 wherein said decorrelation filter (25a-25c) is also configured for filtering narrow band interference from other sources (28).

5. The MANET according to Claim 1 wherein each mobile node (21a-21c) is configured for communicating based upon a Gaussian minimum shift keying GMSK protocol.

6. The MANET according to Claim 1 wherein each mobile node (21a-21c) is configured for communicating further based upon at least one of a voice relay protocol and a data relay protocol.

7. A method of operating a mobile ad-hoc network MANET (20) which lacks of any fixed infrastructure, is configured to dynamically adjust and permits nodes to join and to leave, the MANET (20) comprising a plurality of mobile nodes (21a-21c) establishing wireless communications links therebetween, each mobile node (21a-21c) comprising a wireless transceiver (23a-23c), and a decorrelation filter (25a-25c) cooperating therewith, the method comprising:
communicating via the plurality of mobile nodes (21a-21c) based upon a relay communications protocol such that all nodes (21a-21c) that have correctly received a message repeat the same message on the same carrier frequency at the same pre-established future absolute time; and
reducing interference from other mobile nodes (21a-21c) with the decorrelation filter.

8. The method according to Claim 7 wherein the decorrelation filter comprises an adaptive decorrelation filter.

9. The method according to claim 7 wherein each mobile communicates based upon a Gaussian minimum shift keying GMSK protocol.

## Patentansprüche

1. Mobiles ad-hoc Netzwerk MANET (20), dem eine festgelegte Infrastruktur fehlt, das ausgebildet ist zum dynamischen Anpassen und es Netzknoten erlaubt, beizutreten und auszutreten, das MANET (20) umfassend:
eine Vielzahl von mobilen Netzknoten (21a-21c), die zwischen sich drahtlose Kommunikationsverbindungen einrichten, wobei die Vielzahl der mobilen Netzknoten (21a-21c) basierend auf einem Relais-Kommunikations-Protokoll derart kommunizieren, dass alle Netzknoten (21a-21c), die die Nachricht fehlerlos erhalten haben, dieselbe Nachricht auf derselben Trägerfrequenz zu derselben vorbestimmten zukünftigen absoluten Zeit wiederholen;
jeder mobile Netzknoten (21a-21c) umfassend einen drahtlosen Empfänger (23a-23c);
wobei jeder mobile Netzknoten (21a-21c) weiter einen Dekorrelationsfilter (25a-25c) umfasst, der mit dem drahtlosen Empfänger (23a-23c) zum Verringern von Interferenz von anderen mobilen Netzknoten (21a-21c) zusammenarbeitet.

2. MANET nach Anspruch 1, wobei der Dekorrelationsfilter (25a-25c) einen adaptiven Dekorrelationsfilter umfasst.

3. MANET nach Anspruch 1, wobei der Dekorrelationsfilter (25a-25c) auch ausgebildet ist zum Reduzieren von Mehrweginterferenz von anderen mobilen Netzknoten (21a-21c).

4. MANET nach Anspruch 1, wobei der Dekorrelationsfilter (25a-25c) weiter ausgebildet ist zum Filtern einer Niederfrequenzinterferenz von anderen Quellen (28).

5. MANET nach Anspruch 1, wobei jeder mobile Netzknoten (21a-21c) ausgebildet ist zum Kommunizieren basierend auf einem Gaussian minimum shift keying GMSK Protokoll.

6. MANET nach Anspruch 1, wobei jeder Netzknoten (21a-21c) ausgebildet ist zum Kommunizieren weiter basierend auf mindestens einem von einem Sprach-Relais-Protokol und einem Daten-Relais-Protokoll.

7. Verfahren zum Ausführen eines mobilen ad-hoc Netzwerks MANET (20) dem eine festgelegte Infrastruktur fehlt, das ausgebildet ist zum dynamischen Anpassen und es Netzknoten erlaubt beizutreten und auszutreten, das MANET (20) umfassend eine Vielzahl von mobilen Netzknoten (21a-21c), die drahtlose Kommunikationsverbindungen zwischen sich einrichten, wobei jeder mobile Netzknoten (21a-21c) einen drahtlosen Empfänger (23a-23c) umfasst, und einen Dekorrelationsfilter (25a-25c), der mit diesem zusammenarbeitet, das Verfahren umfassend:
Kommunizieren durch die Vielzahl von mobilen Netzknoten (21a-21c) basierend auf einem Relais-Kommunikations-Protokoll derart, dass alle Netzknoten (21a-21c), die eine Nachricht fehlerlos empfangen haben, dieselbe Nachricht auf derselben Trägerfrequenz zu derselben vorbestimmten zukünftigen absoluten Zeit wiederholen; und
Verringern von Interferenz von anderen mobilen Netzknoten (21a-21c) durch den Dekorrelationsfilter.

8. Verfahren nach Anspruch 7, wobei der Dekorrelationsfilter einen adaptiven Dekorrelationsfilter umfasst.

9. Verfahren nach Anspruch 7, wobei jedes Mobiltelefon basierend auf einem Gaussian minimum shift keying GMSK Protokoll kommuniziert.

## Revendications

1. Réseau mobile ad-hoc MANET (20) qui est dépourvu de toute infrastructure fixe, est configuré pour s'ajuster dynamiquement et permet à des noeuds de se joindre et se quitter, le MANET (20) comprenant :
une pluralité de noeuds mobiles (21a-21c) établissant des liaisons de communications sans fil entre eux, ladite pluralité de noeuds mobiles (21a-21c) communiquant sur la base d'un protocole de communications relais d'une manière telle que tous les noeuds (21a-21c) qui ont correctement reçu un message répètent le même message sur la même fréquence porteuse au même temps absolu futur prédéterminé ;
chaque noeud mobile (21a-21c) comprenant un émetteur-récepteur sans fil (23a-23c) ;
dans lequel chaque noeud mobile (21a-21c) comprend en outre un filtre de décorrélation (25a-25c) coopérant avec l'émetteur-récepteur sans fil (23a-23c) pour réduire une interférence provenant d'autres noeuds mobiles (21a-21c).

2. MANET selon la revendication 1, dans lequel ledit filtre de décorrélation (25a-25c) comprend un filtre de décorrélation adaptatif.

3. MANET selon la revendication 1, dans lequel ledit filtre de décorrélation (25a-25c) est également configuré pour réduire une interférence multivoies provenant d'autres noeuds mobiles (21a-21c).

4. MANET selon la revendication 1, dans lequel ledit filtre de décorrélation (25a-25c) est également configuré pour filtrer une interférence en bande étroite provenant d'autres sources (28).

5. MANET selon la revendication 1, dans lequel chaque noeud mobile (21a-21c) est configuré pour communiquer sur la base d'un protocole de modulation par déplacement de fréquence minimum à filtre gaussien GMSK.

6. MANET selon la revendication 1, dans lequel chaque noeud mobile (21a-21c) est configuré pour communiquer en outre sur la base d'au moins un parmi un protocole de relais vocal et un protocole de relais de données.

7. Procédé d'utilisation d'un réseau mobile ad-hoc MANET (20) qui est dépourvu de toute infrastructure fixe, est configuré pour s'ajuster dynamiquement et permet à des noeuds de se joindre et se quitter, le MANET (20) comprenant une pluralité de noeuds mobiles (21a-21c) établissant des liaisons de communications sans fil entre eux, chaque noeud mobile (21a-21c) comprenant un émetteur-récepteur sans fil (23a-23c), et un filtre de décorrélation (25a-25c) coopérant avec celui-ci, le procédé comprenant :
la communication par l'intermédiaire de la pluralité de noeuds mobiles (21a-21c) sur la base d'un protocole de communications relais d'une manière telle que tous les noeuds (21a-21c) qui ont correctement reçu un message répètent le même message sur la même fréquence porteuse au même temps absolu futur prédéterminé ; et
la réduction d'une interférence provenant d'autres noeuds mobiles (21a-21c) avec le filtre de décorrélation.

8. Procédé selon la revendication 7, dans lequel le filtre de décorrélation comprend un filtre de décorrélation adaptatif.

9. Procédé selon la revendication 7, dans lequel chaque mobile communique sur la base d'un protocole de modulation par déplacement de fréquence minimum à filtre gaussien GMSK.
